# EUROPEAN PATENT SPECIFICATION

(11) **EP 4 159 415 B1**
(45) Date of publication and mention of the grant of the patent: **16.07.2025**
(21) Application number: 21199971.9
(22) Date of filing: 29.09.2021
(51) Int. Cl.: B29C 65/06, B29C 73/04, B64F 5/40, B29C 73/26, B64C 1/00

(54) **METHOD FOR JOINING FIBRE REINFORCED COMPOSITE PARTS USING FRICTION STIR WELDING ALONG A BUTT JOINT, AIRCRAFT COMPONENT AND AIRCRAFT**
VERFAHREN ZUM VERBINDEN VON FASERVERSTÄRKTEN VERBUNDTEILEN MITTELS REIBRÜHRSCHWEISSEN ENTLANG EINER STOSSFUGE, FLUGZEUGBAUTEIL UND FLUGZEUG
PROCÉDÉ D'ASSEMBLAGE DE PIÈCES COMPOSITES RENFORCÉES PAR DES FIBRES À L'AIDE DE SOUDURE PAR FRICTION MALAXAGE LE LONG D'UN JOINT BOUT À BOUT, COMPOSANT D'AÉRONEF ET AÉRONEF

(43) Date of publication of application: 05.04.2023
(73) Proprietor: Airbus (S.A.S.), 31700 Blagnac (FR)
(72) Inventor: Metzner, Christian, 82024 Taufkirchen (DE); Beier, Uwe, 82024 Taufkirchen (DE); Silvanus, Jürgen, 82024 Taufkirchen (DE)
(74) Representative: KASTEL Patentanwälte PartG mbB

(56) References cited:
- WO-A2-2004/110738
- JP-A- 2003 145 625

## Description

The invention relates to a method for joining fibre reinforced composite parts using friction stir welding along a butt joint. Further, the invention relates to an aircraft component and an aircraft.

Composite materials enable high light-weight potential for highly loaded structures like airframes. Further, the joining of smaller subparts to large components is of high importance. In particular, joining technics are necessary requiring a low effort regarding e. g. preparation, joining process, post-treatment, etc. Further, additional weight shall be avoided, which is caused e. g. by rivets. Moreover, there shall be no negative material impact on the substrates, like it is for example caused by holes or misaligned or broken fibres. Further, a failsafe option is desired, like e. g. a second load path or fibre reinforcement.

Several joining technics are already known. They provide individual benefits but also drawbacks. These technics comprise e. g. adhesive boding, riveting, welding and interdiffusion. However, adhesive bonding requires surface preparation, riveting causes added weight and requires an adapted ply stacking, and welding usually leads to matrix joining only. Interdiffusion works for thermoset/thermoplastic joining only. A polymer affinity is required, and only few combinations are feasible. Nearly all composite joints work with the overlap principle, which adds additional weight and loads. Bending usually results in out-of-plane loads.

Friction stir welding of composites is for example described in DE 10 2008 019 062 B4 and US 10,456,985 B2.

The main load carrying component of Fibre Reinforced Polymers (FRP) are the fibres. The highest performances are achieved for continuous fibre reinforced polymers. If two parts made from FRP are joined there is a discontinuity of load carrying from one to the other part and thus a weak point. Fibres based on e. g. carbon, glass or aramid cannot be connected by melting as it can be done for metals during welding. In order to tackle this weak point two main strategies are currently employed. One of them is riveting which is based on bearing stress, and the other is based on adhesive or welding and transfers loads via shear stress. Both require an overlapping geometry, which in many cases lead to complex secondary loads.

Exceeding that, the solutions according to the state of the are known to be complicated - e. g. pre-treatment and cleaning for adhesive joining, tolerance compensation and many process steps for riveting, tooling and many process parameters for welding. Friction Stir Welding (FSW) is frequently used for metal joining. This process employs a rotating pin to generate heat to induce a welding and mixing of material between two parts. For friction stir welding of thermoplastic materials additional heat sources are frequently employed. For continuous fibre reinforced polymer parts this certainly means that in the joining area only broken-down short fibres in the welding line exist.

JP 2003 145625 A and WO 2004/110738 A2 disclose methods for joining two fiber-reinforced thermoplastic resin members.

It is the object of the invention to provide a method for joining fibre reinforced composite parts, which requires a relatively low effort, avoids additional weight, and leads to a strong joint which can resist high loads.

The object is achieved by the subject matter according to the independent claims. Advantageous embodiments are subject matter of the dependent claims.

According to a first aspect, the invention provides a method for joining fibre reinforced composite parts using friction stir welding, comprising the steps of providing at least a first and a second part, both made of fibre reinforced thermoplastic material and both having a joining surface for forming a butt joint between both parts, wherein the joining surface of the first part comprises one or more protrusions which fit into one or more grooves of the second part when forming the butt joint; positioning both parts thereby forming the butt joint; and welding the parts by friction stir welding along a welding path which follows the geometry of the one or more protrusions and/or grooves to locally melt the material of both parts in a contact area defined by that geometry.

The friction stir welding of thermoplastic composite materials according to the invention provides a beneficial result, in which pre-treatment, cleaning, drilling, additional weight and the drawbacks related thereto are omitted and a strong joint between the parts is created. In addition, using the FSW technique has many cost advantages in manufacturing, like e.g. pre-assembly spot stitching, robust geometrical tolerance, etc. Further, the Poka Yoke principle can be applied by using the method of the invention.

Preferably, the one or more protrusions and/or grooves of the joining surfaces of both parts form a puzzle-like geometry fitting into each.

Preferably, both parts are interlocking each other at the joining surfaces when forming the butt joint.

Preferably, a friction stir probe is rotating between the joining surfaces of both parts to melt the material within the contact area.

Preferably, the joining surfaces comprise a zig-zag geometry defining the contact area between both parts and the welding path.

Preferably, the joining surfaces of both parts comprise a rectangular geometry defining the contact area between both parts and the welding path.

Preferably, the joining surfaces of both parts comprise a diamond-like geometry defining the contact area between both parts and the welding path.

Preferably, the parts are configured such that their joining surfaces form the butt joint as a closed loop when the parts are positioned.

Preferably, wherein the at least one protrusion of the first part has a contour which fits into an undercut formed by the at least one groove of the second part for holding the protrusion in place.

Preferably, the at least one protrusion of the first part comprises a relatively wide head portion and a relatively narrow neck portion, and the at least one groove of the second part comprises a relatively wide inner portion and a relatively narrow front portion for holding the protrusion of the first part in place.

Preferably, the geometry of the at least one protrusion of the first part is configured such that continuous fibres within the first part, which extend into or the protrusion, are partly surrounded by the welding path without being disturbed by the welding.

Preferably, each part comprises a plurality of grooves and/or protrusions fitting into each other and defining the geometry of the contact area between both parts and the welding path. One or more protrusions and grooves can be formed in both parts.

Preferably, a bond line defined by the welding path comprises short fibres.

Preferably, the thickness of the parts in an area comprising the one or more protrusions and/or grooves is increased relative to another portion of each part.

According to a second aspect, the invention provides the use of the method according to the invention as a repair method, wherein a damaged portion of the first part is cut out along a cutting line and removed from the first part before the first part is provided, and a repair part having a shape that matches the shape of the cut portion of the first part is provided as the second part, wherein the joining surfaces of the parts are formed by the shape of the cutting line.

According to a third aspect, the invention provides an aircraft component comprising at least two composite parts made of fibre reinforced thermoplastic material which are joint by friction stir welding, wherein one or more protrusions provided in a joining surface of a first part fit into one or more grooves provided in a joining surface of a second part at a butt joint between both parts; wherein the parts are welded by friction stir welding in a contact area between the joining surfaces along a welding path which follows the geometry of the one or more protrusions and/or grooves.

Preferably, the composite parts are welded by the method according to the invention.

According to a fourth aspect, the invention provides an aircraft comprising an aircraft component according to the invention.

In particular, the invention enables carbon fibre reinforced polymers (CFRP) load carrying butt joints. As linear butt joints made from thermoplastic friction stir welding will fall back to the short fibre reinforced properties of the base material, such structures are about one order of magnitude lower in performance as to undisturbed CFRP made from continuous fibres. To enable such butt joints for an at least mild load transfer, the load case in particular changes to shear loads and/or geometric interlocking.

In particular, the joining process according to the invention can also cope with the through thickness geometry itself and the inevitable tolerances of the gap. Thermoplastic friction stir welding according to the invention, which may comprise an additional material feed, can solve this challenge.

The method may in particular comprises the following steps:
(a) providing two prepared pieces of composite
(b) joining of the two pieces using thermoplastic friction stir welding;
with option to increase transferable loads by increased local laminate thickness. Bond-lines may contain short fibres. Thus, they have similar module properties compared to the base material, which leads to further benefits for bond line strength.

Embodiments of the invention are described in detail with reference to the accompanying drawings, in which
- **Fig. 1**: schematically depicts a top view of two parts prepared for welding at a butt joint according to a first embodiment of the invention;
- **Fig. 2**: schematically depicts a top view of the parts shown in Fig. 1 forming the butt joint during friction stir welding;
- **Fig. 3**: schematically depicts a side view of the parts shown in Fig. 1 forming the butt joint after friction stir welding;
- **Fig. 4**: schematically depicts an enlarged sectional view of the butt joint of the parts shown in Fig. 1 to 3;
- **Fig. 5**: schematically depicts a top view of two parts prepared for welding at a butt joint according to a second embodiment of the invention;
- **Fig. 6**: schematically depicts a top view of two parts welded at a butt joint according to a third embodiment of the invention;
- **Fig. 7**: schematically depicts a top view of two parts welded at a butt joint according to a fourth embodiment of the invention; and
- **Figs. 8a-d**: schematically depict top views of a damaged part during different repair steps according to a fifth embodiment of the invention

For similar elements in the drawings or elements having the same function, the same reference numbers are used in the different drawings and embodiments described herein. Their description will only be repeated if it seems useful. Details and advantages described with reference to the method according to the invention also apply to the aircraft component according to the invention and vice versa.

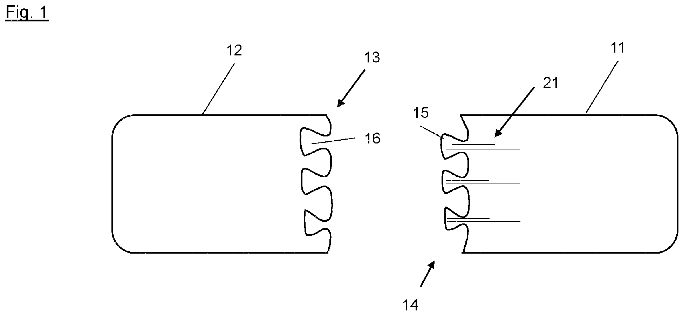

A first preferred example of the method according to the invention is described in the following with reference to **Figs. 1 to 4****.**

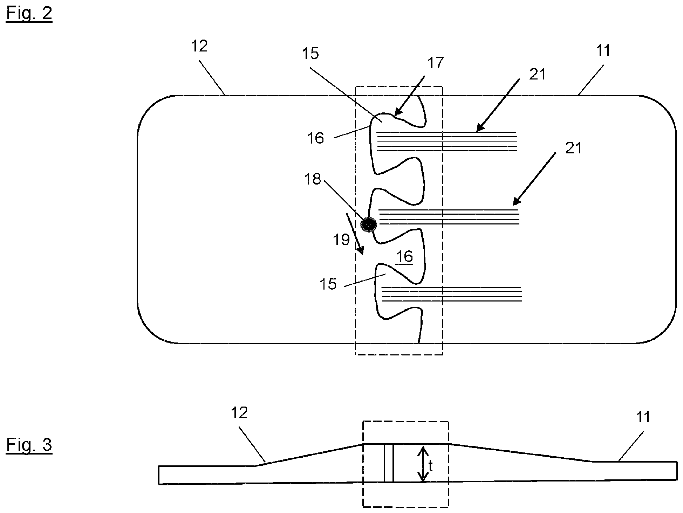

**Fig. 1** shows a first composite part 11 and a second composite part 12 positioned for being welded. Both parts 11, 12 are made of fibre reinforced thermoplastic material or fibre reinforced polymers. Each composite part 11, 12 has a joining surface 13, 14 in order to form a butt joint 17 when they are connected to each other at the joining surfaces 13, 14 (see Fig. 2). The joining surface 13 of the first composite part 11 comprises a number of protrusions 15 designed to fit into a number of grooves 16 respectively, which are provided in the second part 12 when both parts are connected to each other at their joining surfaces 13, 14 to form butt joint 17.

Both parts 11, 12 are reinforced by long fibres 21. In the figures, only the fibres 21 of the first part 11 are shown. However, also the second part 12 comprises such reinforcement fibres which are not shown in the figures. Similar to the first part 11, also second part 12 comprises protrusions, and similar to the second part 12 also first part 11 comprises grooves.

Thus, both parts 11, 12 comprise or form a puzzle-like geometry. When both parts 11, 12 are connected, the grooves 15 and recesses or grooves16 of both parts are interlocking each other at the joining surfaces 13, 14.

In a second step, shown in **Fig. 2****,** both parts 11, 12 are positioned relative to each other such that their surfaces 13, 14 get in contact at butt joint 17. Then, the parts 11, 12 are welded together by friction stir welding, wherein a rotating pin 18 moves along a welding path 19 which follows the geometry of protrusions 15 and grooves 16. During the continuous movement of rotating pin 18 along welding path 19, the material of both parts 11, 12 is locally melted by the friction heat of rotating pin 18 in a contact area between both parts 11, 12 which is defined by the geometry of the protrusions 15 and grooves 16. The friction stir welding process and a friction stir welding tool comprising rotating pin 18 as described in more detail in DE 10 2008 019 062 B4 and/or US 10,456,985 B2 mentioned above are preferably used for welding the parts 11, 12 to each other.

When the parts 11, 12 are connected, variable gaps be formed between both parts 11, 12, i.e. between their joining surfaces 13, 14, due to tolerances.

The reinforcement fibres 21 provided with in the composite parts 11, 12 are long fibres and extend into the protrusions 15, as it is shown in the figures for the first part 11. However, the same may also apply in a similar manner for reinforcement fibres provided in second part 12. During welding, when pin 18 moves along the butt joint 17 between both parts 11, 12, the long fibres 21 extending within first part 11 and into the protrusions 15 are not disturbed or destroyed by the friction stir welding process, since the welding path along the geometry of the protrusions and grooves surrounds the ends of long fibres 20 one. The same applies for long fibres provided in second part 12 and extending into protrusions of second part 12, which are not shown in the figures.

The protrusions 15 of first part 11 have a contour which fits into an undercut formed by the grooves of second part 12 in order to hold the protrusions 15 of the first part 11 with in the grooves 16. The same applies vice versa for protrusions provided in the second part 12 and grooves provided in the first part 11.

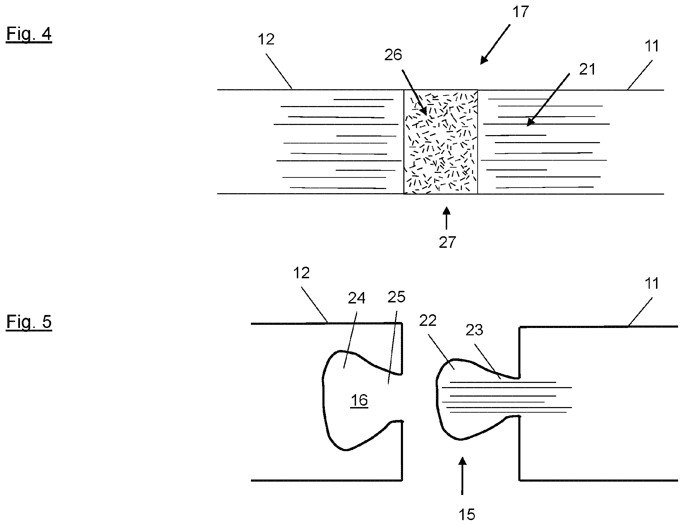

As also shown in **Fig. 5** in more detail, the protrusions 15 of first part 11 have a relatively wide head or front portion 22 and a relatively narrow neck portion 23. Corresponding thereto, the grooves 16 of second part 12 comprise a relatively wide inner portion 24 and a relatively narrow front portion 25 for holding the protrusion 15 in place within groove 16.

As depicted in **Fig. 3****,** which shows a side view of welded or connected parts shown in figure 2, both parts 11, 12 have an increased thickness t or local laminate thickness near the meandering bond line along butt joint 17, thereby increasing transferable loads.

**Fig. 4** shows an enlarged sectional view of the butt joint 17 between parts 11, 12. Preferably, the bond lines along butt joint 17, which correspond to the welding path, contain short fibres 26. Thus, it has similar module properties compared to the base material, which is beneficial for the strength of the bond line. Short fibres 26 are distributed within the contact zone 27 between both parts 11, 12.

**Fig. 5** shows a top view of two parts 11, 12 prepared for welding according to a second embodiment of the invention. Different from the first example shown in fig-ures 1 to 3, first part 11 comprises only one protrusion 15 and the second part 12 comprises only one groove 16 in which protrusion 15 is placed when both parts 11, 12 are connected and form the butt joint 17. Further details and features have already been discussed above with reference to figures 1 to 4 and apply also for this example.

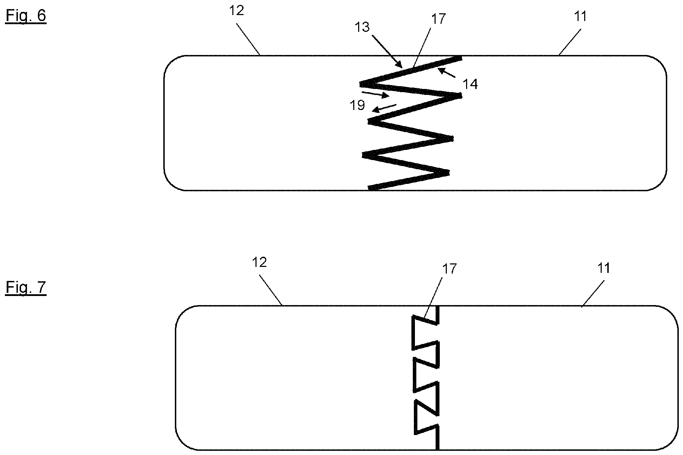

**Fig. 6** depicts a top view of two parts 11, 12 positioned and welded at butt joint 17 according to a third example of the invention. Here, the joining surfaces 13, 14 of parts 11, 12 contacting each other when forming the butt joint 17, show a zig-zag geometry which defines the contact area between parts 11, 12, which contact area defines the welding path 19, i.e. the path of the rotating pin 18 (see Fig. 2) moving between the joining surfaces 13, 14 of parts 11, 12 respectively.

Rotating pin 18, as visible in Fig. 2, extends into the contact zone of the joining surfaces 13, 14, i.e. in the direction of the thickness t of both parts (see Fig. 3) which is perpendicular to the image plane of figure 6, i.e. to the upper and/or lower surfaces of parts 11, 12. The same applies for the other embodiments shown above.

**Figure 7** shows a further example, wherein the butt joint 17 has a diamond shaped geometry instead of a serpentine-line geometry as shown in figures 1 and 2 or a zigzag geometry as shown in figure 6.

According to another preferred embodiment which is not shown here, butt joint 17 has a rectangular geometry. Also other geometries are possible, which can be designed or selected according to the specific requirements of the friction stir welding connection. Further details of the embodiments shown in figures 5 to 7 are discussed above with reference to figures 1 to 4 and may also apply here.

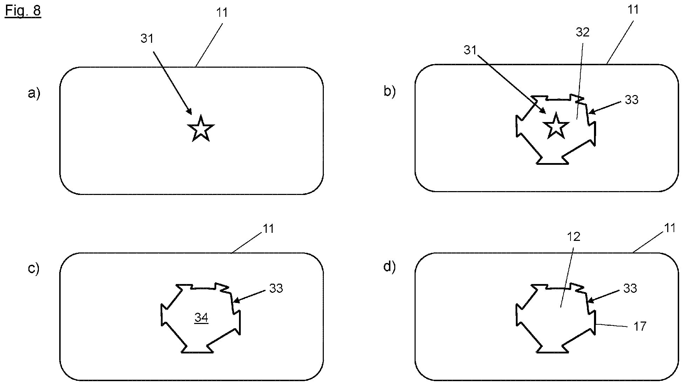

Figures 8a-d shows another preferred embodiment of the invention, in which the method is used as a repair method. A first part 11 comprises e.g. a damage 31 (see Fig. 8a).

A portion 32 of the first part 11, which portion comprises damage 31, is cut out along a cutting line 33 forming protrusions and grooves, which cutting line 33 surrounds portion 32, in this example as a closed line or loop (see Fig. 8b).

Then, portion 31 comprising damage 32 is removed from the first part 11 such that there is a gap or void space 34 in the first part 11, before it is provided (see Fig. 8c).

A second part 12 is configured as a repair part to replace the portion 31 cut-out from the first part 11. Second part 12 has a shape that matches the shape of the cut-out portion 32 of the first part 11, and is inserted into gap 34 when both parts 11, 12 are positioned to form butt joint 17. The joining surfaces of the parts 11, 12 forming butt joint 17 are defined by the shape of the cutting line 33 (see Fig. 8d).

Then, parts 11, 12 are welded by friction stir welding along a welding path which follows the geometry of cutting line 33 to locally melt the material of both parts 11, 12 in a contact area 27 defined by that geometry.

Further details are described above with reference to the other embodiments.

As discussed above, each composite part 11, 12 comprises one or more protrusions 15 and/or grooves 16 which fit into one or more protrusions and/or grooves of the corresponding composite part when forming the butt joint 17. Both parts 11, 12 are configured for being used in the method according to the invention as shown in the different examples above.

The composite parts 11, 12 after being welded to each other in accordance with the method described above are preferably designed for being used as a component of an aircraft.

### List of reference signs:

- 11, 12: parts
- 13, 14: joining surfaces
- 15: protrusion
- 16: groove
- 17: butt joint
- 18: rotating pin
- 19: welding path
- 21: long fibres
- 22: head portion
- 23: neck portion
- 24: inner portion
- 25: front portion
- 26: short fibres
- 27: contact zone
- 31: damage
- 32: portion
- 33: cutting line
- 34: gap or void space

## Claims

1. Method for joining fibre reinforced composite parts using friction stir welding, comprising:
providing at least a first and a second part (11, 12), both made of fibre reinforced thermoplastic material and both having a joining surface (13, 14) for forming a butt joint (17) between both parts (11, 12),
wherein the joining surface (13) of the first part (11) comprises one or more protrusions (15) which fit into one or more grooves (16) of the second part (12) when forming the butt joint (17);
positioning both parts (11, 12) thereby forming the butt joint (17); and
welding the parts (11, 12) by friction stir welding along a welding path (19) which follows the geometry of the one or more protrusions (15) and/or grooves (16) to locally melt the material of both parts (11, 12) in a contact area (27) defined by that geometry.

2. Method according to claim 1, wherein
2.1. the one or more protrusions (15) and/or grooves (16) of the joining surfaces (13, 14) of both parts (11, 12) form a puzzle-like geometry, and/or
2.2. both parts (11, 12) are interlocking each other at the joining surfaces when forming the butt joint (17).

3. Method according to claim 1 or 2, wherein a friction stir probe (18) is rotating between the joining surfaces (13, 14) of both parts (11, 12) to melt the material within the contact area (27).

4. Method according to any of the preceding claims, wherein the joining surfaces (13, 14) comprise
4.1. a zig-zag geometry and/or
4.2. a rectangular geometry and/or
4.3. or a diamond-like geometry
defining the contact area (27) between both parts (11, 12) and the welding path (19).

5. Method according to any of the preceding claims, wherein the parts (11, 12) are configured such that their joining surfaces (13, 14) form the butt joint (17) as a closed loop when the parts (11, 12) are positioned.

6. Method according to any of the preceding claims, wherein the at least one protrusion (15) of the first part (11) has a contour which fits into an undercut formed by the at least one groove (16) of the second part (12) for holding the protrusion (15) in place.

7. Method according to any of the preceding claims, wherein the at least one protrusion (15) of the first part (11) comprises a relatively wide head portion (22) and a relatively narrow neck portion (23), and the at least one groove (16) of the second part (12) comprises a relatively wide inner portion (24) and a relatively narrow front portion (25) for holding the first part in place.

8. Method according to any of the preceding claims, wherein the geometry of the at least one protrusion (15) of the first part (11) is configured such that continuous long fibres (21) within the first part (11), which extend into the protrusion (15), are partly surrounded by the welding path (19) without being disturbed by the welding process.

9. Method according to any of the preceding claims, wherein each part (11, 12) comprises a plurality of grooves (16) and/or protrusions (15) fitting into each other and defining the geometry of the contact area (27) between both parts (11, 12) and the welding path (19).

10. Method according to any of the preceding claims, wherein a bond line defined by the welding path (19) comprises short fibres (26).

11. Method according to any of the preceding claims, wherein the thickness of the parts (11, 12) in an area comprising the one or more protrusions (15) and/or grooves (16) is increased relative to another portion of each part.

12. Use of the method according to any of the preceding claims as a repair method, wherein
a damaged portion of the first part (11) is cut out along a cutting line and removed from the first part (11) before the first part (11) is provided;
a repair part having a shape that matches the shape of the cut portion of the first part (11) is provided as the second part (12),
wherein the joining surfaces (13, 14) of the parts (11, 12) are formed by the shape of the cutting line.

13. Aircraft component comprising at least two composite parts (11, 12) made of fibre reinforced thermoplastic material which are joint by friction stir welding,
wherein one or more protrusions (15) provided in a joining surface (13) of a first part (11) fit into one or more grooves (16) provided in a joining surface (14) of a second part (12) at a butt joint (17) between both parts (11, 12);
wherein the parts (11, 12) are welded by friction stir welding in a contact area (27) between the joining surfaces (13, 14) along a welding path (19) which follows the geometry of the one or more protrusions (15) and/or grooves (16).

14. Aircraft comprising an aircraft component according to claim 13.

## Patentansprüche

1. Verfahren zum Verbinden von faserverstärkten Verbundteilen durch Reibrührschweißen, umfassend:
Bereitstellen wenigstens eines ersten und eines zweiten Teils (11, 12), die beide aus faserverstärktem thermoplastischem Material bestehen und beide eine Verbindungsfläche (13, 14) zum Bilden einer Stoßverbindung (17) zwischen beiden Teilen (11, 12) aufweisen,
wobei die Verbindungsfläche (13) des ersten Teils (11) einen oder mehrere Vorsprünge (15) umfasst, die in eine oder mehrere Nuten (16) des zweiten Teils (12) passen, wenn die Stoßverbindung (17) gebildet wird;
Positionieren beider Teile (11, 12), um die Stoßverbindung (17) zu bilden; und Schweißen der Teile (11, 12) durch Reibrührschweißen entlang eines Schweißpfads (19), der der Geometrie des/der einen oder der mehreren Vorsprünge (15) und/oder Nuten (16) folgt, um das Material beider Teile (11, 12) in einem von dieser Geometrie definierten Kontaktbereich (27) lokal zu schmelzen.

2. Verfahren nach Anspruch 1, wobei
2.1. der/die eine oder die mehreren Vorsprünge (15) und/oder Nuten (16) der Verbindungsflächen (13, 14) beider Teile (11, 12) eine puzzleartige Geometrie bilden und/oder
2.2. beide Teile (11, 12) bei Bilden der Stoßverbindung (17) an den Verbindungsflächen ineinandergreifen.

3. Verfahren nach Anspruch 1 oder 2, wobei zwischen den Verbindungsflächen (13, 14) beider Teile (11, 12) ein Reibrührkopf (18) rotiert, um das Material in dem Kontaktbereich (27) zu schmelzen.

4. Verfahren nach einem der vorstehenden Ansprüche, wobei die Verbindungsflächen (13, 14) umfassen
4.1. eine Zick-Zack-Geometrie und/oder
4.2. eine rechteckige Geometrie und/oder
4.3. oder eine diamantartige Geometrie
die die Kontaktfläche (27) zwischen beiden Teilen (11, 12) und dem Schweißpfad (19) definieren.

5. Verfahren nach einem der vorstehenden Ansprüche, wobei die Teile (11, 12) so gestaltet sind, dass ihre Verbindungsflächen (13, 14) die Stoßverbindung (17) als geschlossene Schleife bilden, wenn die Teile (11, 12) positioniert sind.

6. Verfahren nach einem der vorstehenden Ansprüche, wobei der wenigstens eine Vorsprung (15) des ersten Teils (11) eine Kontur aufweist, die in eine Hinterschneidung passt, die von der wenigstens einen Nut (16) des zweiten Teils (12) gebildet wird, um den Vorsprung (15) in Position zu halten.

7. Verfahren nach einem der vorstehenden Ansprüche, wobei der wenigstens eine Vorsprung (15) des ersten Teils (11) einen vergleichsweise breiten Kopfabschnitt (22) und einen vergleichsweise schmalen Halsabschnitt (23) umfasst und die wenigstens eine Nut (16) des zweiten Teils (12) einen vergleichsweise breiten inneren Abschnitt (24) und einen vergleichsweise schmalen vorderen Abschnitt (25) umfasst, um den ersten Teil in Position zu halten.

8. Verfahren nach einem der vorstehenden Ansprüche, wobei die Geometrie des wenigstens einen Vorsprungs (15) des ersten Teils (11) so gestaltet ist, dass kontinuierliche lange Fasern (21) innerhalb des ersten Teils (11), die sich in den Vorsprung (15) erstrecken, teilweise von dem Schweißpfad (19) umgeben werden, ohne durch den Schweißvorgang gestört zu werden.

9. Verfahren nach einem der vorstehenden Ansprüche, wobei jeder Teil (11, 12) eine Vielzahl von Nuten (16) und/oder Vorsprüngen (15) umfasst, die ineinander passen und die Geometrie des Kontaktbereichs (27) zwischen beiden Teilen (11, 12) und dem Schweißpfad (19) definieren.

10. Verfahren nach einem der vorstehenden Ansprüche, wobei eine von dem Schweißpfad (19) definierte Verbindungslinie kurze Fasern (26) umfasst.

11. Verfahren nach einem der vorstehenden Ansprüche, wobei die Dicke der Teile (11, 12) in einem Bereich, der den/die einen oder die mehreren Vorsprünge (15) und/oder Nuten (16) umfasst, im Vergleich zu einem anderen Abschnitt jedes Teils erhöht ist.

12. Verwendung des Verfahrens nach einem der vorstehenden Ansprüche als Reparaturverfahren, wobei
ein beschädigter Abschnitt des ersten Teils (11) entlang einer Schnittlinie ausgeschnitten und von dem ersten Teil (11) entfernt wird, bevor der erste Teil (11) bereitgestellt wird;
ein Reparaturteil mit einer Form, die der Form des geschnittenen Abschnitts des ersten Teils (11) entspricht, als der zweite Teil (12) bereitgestellt wird, wobei die Verbindungsflächen (13, 14) der Teile (11, 12) durch die Form der Schnittlinie gebildet werden.

13. Luftfahrzeugkomponente umfassend wenigstens zwei Verbundteile (11, 12) aus faserverstärktem thermoplastischem Material, die durch Reibrührschweißen verbunden sind,
wobei ein oder mehrere Vorsprünge (15), die in einer Verbindungsfläche (13) eines ersten Teils (11) bereitgestellt sind, in eine oder mehrere Nuten (16) passen, die in einer Verbindungsfläche (14) eines zweiten Teils (12) an einer Stoßverbindung (17) zwischen beiden Teilen (11, 12) bereitgestellt sind;
wobei die Teile (11, 12) durch Reibrührschweißen in einem Kontaktbereich (27) zwischen den Verbindungsflächen (13, 14) entlang eines Schweißpfads (19) verschweißt sind, der der Geometrie des/der einen oder der mehreren Vorsprünge (15) und/oder Nuten (16) folgt.

14. Luftfahrzeug umfassend eine Luftfahrzeugkomponente nach Anspruch 13.

## Revendications

1. Procédé destiné à assembler des pièces composites renforcées de fibres par soudage par friction-malaxage, comprenant :
l'obtention d'au moins une première et une deuxième pièce (11, 12), toutes deux constituées d'un matériau thermoplastique renforcé de fibres et toutes deux ayant une surface d'assemblage (13, 14) destinée à former un joint bout à bout (17) entre les deux pièces (11, 12),
la surface d'assemblage (13) de la première pièce (11) comprenant une ou plusieurs saillies (15) qui s'ajustent à l'intérieur d'une ou plusieurs rainures (16) de la deuxième pièce (12) lors de la formation du joint bout à bout (17) ;
le positionnement des deux pièces (11, 12) et ainsi la formation du joint bout à bout (17) ; et le soudage des pièces (11, 12) par soudage par friction-malaxage le long d'une trajectoire de soudage (19) qui suit la géométrie de la ou des saillies (15) et/ou rainures (16) pour faire fondre localement le matériau des deux pièces (11, 12) dans une zone de contact (27) définie par cette géométrie.

2. Procédé selon la revendication 1, dans lequel 2.1. la ou les saillies (15) et/ou rainures (16) des surfaces d'assemblage (13, 14) des deux pièces (11, 12) forment une géométrie de type puzzle, et/ou 2.2. les deux pièces (11, 12) s'imbriquent au niveau des surfaces d'assemblage lors de la formation du joint bout à bout (17).

3. Procédé selon la revendication 1 ou 2, dans lequel une sonde de friction-malaxage (18) est mise en rotation entre les surfaces d'assemblage (13, 14) des deux pièces (11, 12) pour faire fondre le matériau à l'intérieur de la zone de contact (27).

4. Procédé selon l'une quelconque des revendications précédentes, dans lequel les surfaces d'assemblage (13, 14) présentent
4.1. une géométrie en zigzag et/ou
4.2. une géométrie rectangulaire et/ou
4.3. une géométrie de type diamant
définissant la zone de contact (27) entre les deux pièces (11, 12) et la trajectoire de soudage (19).

5. Procédé selon l'une quelconque des revendications précédentes, dans lequel les pièces (11, 12) sont conçues de telle sorte que leurs surfaces d'assemblage (13, 14) forment le joint bout à bout (17) comme une boucle fermée quand les pièces (11, 12) sont positionnées.

6. Procédé selon l'une quelconque des revendications précédentes, dans lequel l'au moins une saillie (15) de la première pièce (11) a un contour qui s'ajuste à l'intérieur d'une contre-dépouille formée par l'au moins une rainure (16) de la deuxième pièce (12) pour maintenir la saillie (15) en place.

7. Procédé selon l'une quelconque des revendications précédentes, dans lequel l'au moins une saillie (15) de la première pièce (11) comprend une partie de tête relativement large (22) et une partie de col relativement étroite (23), et l'au moins une rainure (16) de la deuxième pièce (12) comprend une partie interne relativement large (24) et une partie avant relativement étroite (25) pour maintenir la première pièce en place.

8. Procédé selon l'une quelconque des revendications précédentes, dans lequel la géométrie de l'au moins une saillie (15) de la première pièce (11) est conçue de telle sorte que de longues fibres continues (21) à l'intérieur de la première pièce (11), qui s'étendent à l'intérieur de la saillie (15), sont partiellement entourées par la trajectoire de soudage (19) sans être perturbées par le processus de soudage.

9. Procédé selon l'une quelconque des revendications précédentes, dans lequel chaque pièce (11, 12) comprend une pluralité de rainures (16) et/ou saillies (15) s'ajustant les unes dans les autres et définissant la géométrie de la zone de contact (27) entre les deux pièces (11, 12) et la trajectoire de soudage (19).

10. Procédé selon l'une quelconque des revendications précédentes, dans lequel une ligne de liaison définie par la trajectoire de soudage (19) comprend de courtes fibres (26).

11. Procédé selon l'une quelconque des revendications précédentes, dans lequel l'épaisseur des pièces (11, 12) dans une zone comprenant la ou les saillies (15) et/ou rainures (16) est accrue par rapport à une autre partie de chaque pièce.

12. Utilisation du procédé selon l'une quelconque des revendications précédentes comme procédé de réparation, dans laquelle
une partie endommagée de la première pièce (11) est coupée le long d'une ligne de coupe et retirée de la première pièce (11) avant que la première pièce (11) soit obtenue ;
une pièce de réparation ayant une forme qui correspond à la forme de la partie coupée de la première pièce (11) est obtenue en tant que deuxième pièce (12),
dans lequel les surfaces d'assemblage (13, 14) des pièces (11, 12) sont formées par la forme de la ligne de coupe.

13. Composant d'aéronef comprenant au moins deux pièces composites (11, 12) constituées d'un matériau thermoplastique renforcé de fibres qui sont assemblées par soudage par friction-malaxage,
dans lequel une ou plusieurs saillies (15) ménagées dans une surface d'assemblage (13) d'une première pièce (11) s'ajustent à l'intérieur d'une ou plusieurs rainures (16) ménagées dans une surface d'assemblage (14) d'une deuxième pièce (12) au niveau d'un joint bout à bout (17) entre les deux pièces (11, 12) ;
dans lequel les pièces (11, 12) sont soudées par soudage par friction-malaxage dans une zone de contact (27) entre les surfaces d'assemblage (13, 14) le long d'une trajectoire de soudage (19) qui suit la géométrie de la ou des saillies (15) et/ou rainures (16).

14. Aéronef comprenant un composant d'aéronef selon la revendication 13.
